# EUROPEAN PATENT SPECIFICATION

(11) **EP 3 959 572 B1**
(45) Date of publication and mention of the grant of the patent: **25.10.2023**
(21) Application number: 20723534.2
(22) Date of filing: 20.04.2020
(51) Int. Cl.: G05B 23/02

(54) **METHOD AND SYSTEM FOR FAULT DETECTION USING CORRELATION OF NOISE SIGNALS**
VERFAHREN UND SYSTEM ZUR FEHLERERKENNUNG MITTELS KORRELATION VON RAUSCHSIGNALEN
PROCÉDÉ ET SYSTÈME DE DÉTECTION DE DÉFAUTS PAR CORRELATION DE SIGNAUX DE BRUIT

(30) Priority: 25.04.2019 IN 201941016370
(43) Date of publication of application: 02.03.2022
(73) Proprietor: ABB SCHWEIZ AG, 5400 Baden (CH)
(72) Inventor: BHAT, Shrikant, Bangalore, 560093 Karnataka (IN); KUMAR-VIJ, Rahul, Bangalore-560048, Garudacharpallya Bangalore 560048 (IN)
(74) Representative: Zimmermann & Partner Patentanwälte mbB
(86) International application number: PCT/IB2020/053715
(87) International publication number: WO 2020/217155

(56) References cited:
- US-A1- 2013 197 849
- US-A1- 2018 024 900

## Description

### Technical Field

The current invention relates in general to industrial plants/ process plants and more particularly for production accounting using artificial intelligence in process plants.

### Background

Generally, material stock validation/production accounting in process plants involves validating the actual stock with the one recorded in the system. Measurements from sensors associated with the process equipment are used to record the stock present in the process equipment. In practice, it is observed that there exist deviations between the recorded stocks and actual stocks. The issues with stock validation are mainly attributed to calibration issues in the sensors, leakage in the process equipment's, malfunctioning of the sensors, drifts in sensor measurement, and the like. It is important to have a system to identify and predict the faults in real time. Thus, improving the manufacturing productivity.

The existing solutions which are used to detect faults involve standard data reconciliation and gross error detection techniques. These techniques consider the spatial redundancy for example mass and energy balance of materials in the process equipment's for detecting faults.

The gross error detection techniques are based on historical data. Any slow drifting in the measuring instruments may be ignored and averaged due to the statistical nature of the algorithms.

Further, if the gross errors are truly outliers and not a reflection of leaks or instrument bias, they might get averaged with good measurements if not detected by statistical techniques (which are subject to error due to probabilistic nature). Also, some good measurements can be wrongly identified as gross errors, and as a consequence, precision of reconciled data is affected.

Further, if averaged measurements containing gross errors are not eliminated and are used in the reconciliation, the fault detections are missed.

An issue with the existing solution is that probability of multiple faults in the measuring instruments and process equipment might not be detected due to the statistical nature of the algorithms.
Document US 2018/0024900 A1 describes a system for detecting false data injection attacks includes one or more sensors configured to each monitor a component and generate signals representing measurement data associated with the component. The system also includes a fault detection computer device configured to: receive the signals representing measurement data from the one or more sensors, receive a fault indication of a fault associated with the component, generate a profile for the component based on the measurement data, and determine an accuracy of the fault indication based upon the generated profile.
Document US 2013/0197849 A1 describes systems, methods, and apparatus for detecting irregular sensor signal noise. The document describes a method for determining reliability of a sensor. The method may include receiving signal samples associated with a sensor; receiving an expected standard deviation value associated with the sensor; estimating noise standard deviation of the signal samples based at least upon a difference between the received sensor samples and predicted sensor signal values; and outputting a noise confidence value based at least in part on a first ratio between the estimated noise standard deviation and the expected standard deviation value.

In view of the above, there is a need to address at least one of the abovementioned limitations and propose a method and system to overcome the abovementioned problems.

### Summary of the Invention

The present invention relates to a method and a system for detecting faults in a plurality of measuring instruments and process equipment in a process plant according to independent claims 1 and 5.

In an embodiment, the process control system correlates the plurality of extracted noise with the plurality of reference noise includes using one or more Artificial Intelligence (AI) based data analysis techniques.

In an embodiment, the detection of the faults includes identifying at least one of a sensor malfunctioning, a sensor drift, a sensor calibration issue, a leakage of materials in the process equipment in the process plant.

In an embodiment, the detected faults are validated by an operator and the validated faults are used in subsequent fault detections.

Systems of varying scope are described herein. In addition to the aspects and advantages described in this summary, further aspects and advantages will become apparent by reference to the drawings and with reference to the detailed description that follows.

### Brief Description of the Drawings

The subject matter of the invention will be explained in more detail in the following text with reference to preferred exemplary embodiments which are illustrated in the drawings, in which:
Figure 1 shows an exemplary environment of a process plant, in accordance with an embodiment of the present disclosure;
Figure 2 shows an exemplary process control system, in accordance with an embodiment of the present disclosure;
Figure 3 illustrates an exemplary flow chart for detecting faults in measuring instruments and a process equipment, in accordance with an embodiment of the present disclosure;
Figure 4 illustrates an exemplary fault detection of leakage in a process equipment of a process plant, in accordance with an embodiment of the present disclosure; and
Figure 5 illustrates an exemplary fault detection of drift in the measurement of a flow sensor of a process plant, in accordance with an embodiment of the present disclosure.

### Detailed Description:

The present invention discloses a method and a system for production accounting in process industries using artificial intelligence.

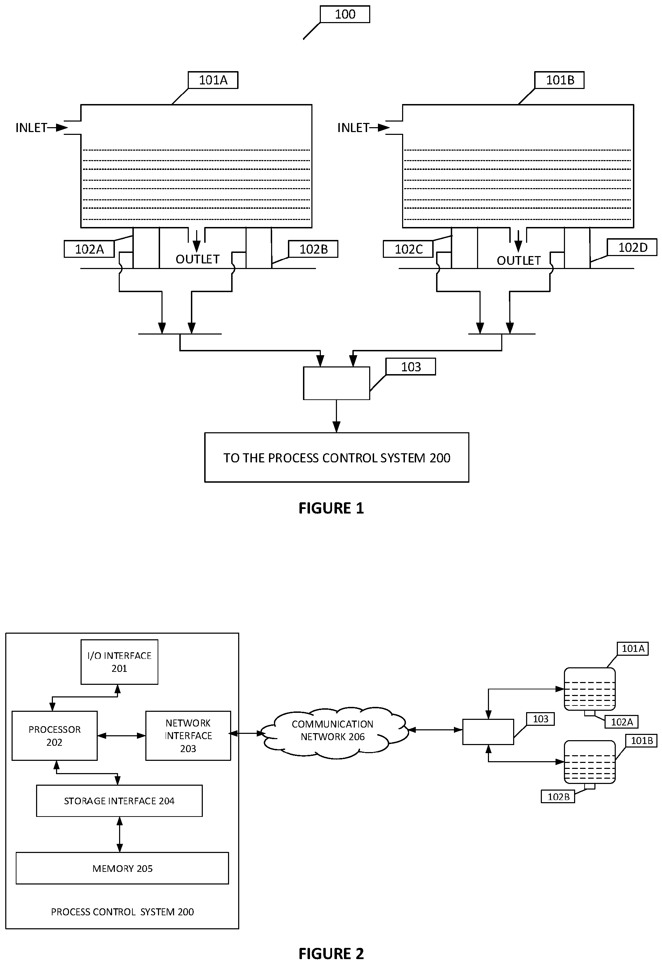

Figure 1 shows an exemplary environment of a process plant (100). A process plant (100) comprises one or more process equipment's for example tanks (101A, 101B) for storing materials, mixers for mixing materials of one or more tanks (101A, 101B), pipes for inter connecting one or more tanks (101A, 101B) and one or more mixers, valves for controlling the flow of materials in to the tanks (101A, 101B) and out of the tanks (101A, 101B), pumps connected to tanks (101A, 101B) for pumping the materials form one tank (101A, 101B) to another, measuring instruments (102A, 102B) including temperature sensors, pressure sensors, weight sensors for measuring quantity of material stored in the tank, composition of one or more materials stored in the tank (e.g., 101A) and flow-rate meters for measuring flow of materials, for monitoring one or more parameters associated with the process equipment. A person skilled in the art will appreciate that the process plant may comprise 'N' tanks which can be represented as a plurality of tanks (101A, ..., 101N). Hereafter, for simplicity the plurality of tanks is represented with referral numeral 101. A reference to a specific tank is represented with the corresponding referral numeral for example (101A). Further, a person skilled in the art will appreciate that the process equipment's may be associated with a plurality of measuring instruments (102A, ..., 102N). Hereafter, for simplicity the measuring instruments is represented with referral numeral 102. A reference to a specific measuring instrument is represented with the corresponding referral numeral for example (102A). Further, the one or more measured signals from the measuring instruments (102) are sent to a summing unit (103) for aggregating the measured signals. The aggregated measured signals are given to the process control system for analysis and fault detection in the measuring instruments (102) or the process equipment.

In an embodiment a tank (101A) in a process plant contains an inlet for receiving one or more materials from one or more tanks (101). The tank (101A) in a process plant contains an outlet for pumping the materials stored in the tank (101A) to one or more tanks (101) in a process plant. Further, the measuring instruments (102) for measuring the one or more signals may be associated with the process equipment for example inside the process equipment, beneath the process equipment or on the outer surface of the process equipment.

In an embodiment, the aggregated signals received from the summing unit (103) is used to extract the one or more parameters of the process. Further, the extracted one or more parameters may be used by the operator to perform data reconciliation and detect faults in the measuring instruments (102) and the process equipment using a process control system.

Figure 2 shows an exemplary process control system. In an embodiment, the process control system (200) may be used to implement the method for detecting faults in measuring instruments and process equipment in a process plant. The process control system (200) may comprise a central processing unit ("CPU" or "processor") (202). The processor (202) may include specialized processing units such as integrated system (bus) controllers, memory management control units, floating point units, graphics processing units, digital signal processing units, etc. The processor (202) may be disposed in communication with one or more input/output (I/O) devices (not shown) via I/O interface (201). Using the I/O interface (201), the process control system (200) may communicate with one or more I/O devices. In some embodiments, the process control system (200) is connected to the service operator through a communication network (206). The processor (202) may be disposed in communication with the communication network (206) via a network interface (203). The network interface (203) may communicate with the communication network (206). The memory (205) may store a collection of program or database components, including, without limitation, user interface (206), an operating system (207), web server (208) etc. In some embodiments, process control system (200) may store user/application data (206), such as the data, variables, records, etc. as described in this disclosure.

In an embodiment, the process control system may receive a plurality of measured signals from a one or more measuring instruments associated with the process equipment's of a process plant. Further, the process control system extracts the noise present in the plurality of measured signals. Furthermore, the process control system correlates the extracted noise with a plurality of noise extracted from the reference signals. The reference signals are recorded and stored in the process control system in the absence of faults. Thereafter, deviations are identified the one or more parameters associated with the process. Finally, the identified deviations and the correlated noise is used for detecting faults in the measuring instruments and the process equipment of the process plant.

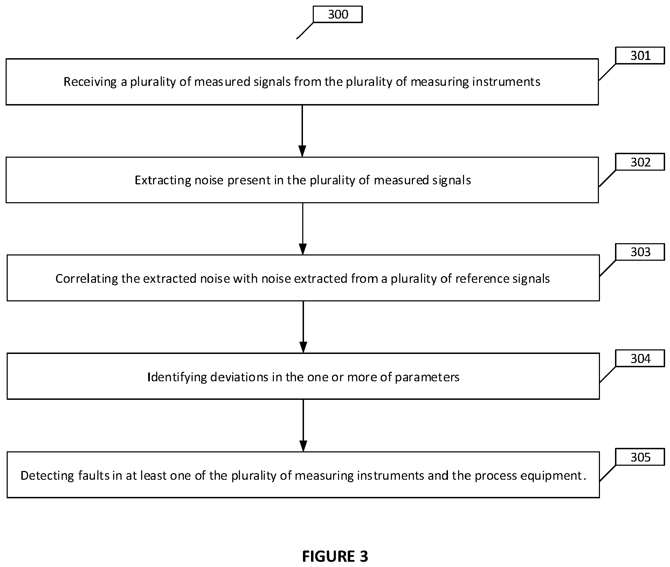

Figure 3 illustrates an exemplary flow chart for detecting faults in measuring instruments (102) and a process equipment. At the step 301, the measuring instruments (102) associated with the process equipment of the process plant monitors the one or more parameters. The plurality of measured signals from the one or more measuring equipment is received by the process control system through a summing unit (103). The summing unit (103) aggregates the plurality of signals from the one or more measuring equipment.

At the step 302, the process control system extracts a noise present in the plurality of the measured signals. The noise extraction is done through the standard signal processing techniques.

At the step 303, the extracted noise is correlated with a noise from a plurality of reference signals. Further, the correlation of the plurality of extracted noise with the plurality of noise from a reference signal is achieved using one or more Artificial Intelligence (AI) based data analysis techniques for example Time Series Analysis. The plurality of reference signals is obtained and stored in the process control system in the absence of faults in the process plant. The plurality of reference signals is stored based on the manual validation done by the operator. An example is detailed in the FIGURE 3 later in the description.

In an embodiment, the periodic measurement of the plurality of measured signals from the one or more measuring instruments (102) possesses an inherent autocorrelation. Autocorrelation indicates a similarity between the plurality of measured signals with a delayed plurality of measured signals. Any fault associated with one or more measuring instruments (102) or the process equipment reflects in the noise associated with the corresponding measurements. Therefore, the autocorrelation in the noise of the plurality of measured signals change or gets affected. Further, identifying such a change in the correlation of the noise in the plurality of the measured signals is used to validate the fault in the process equipment or the one or more measuring instruments (102).

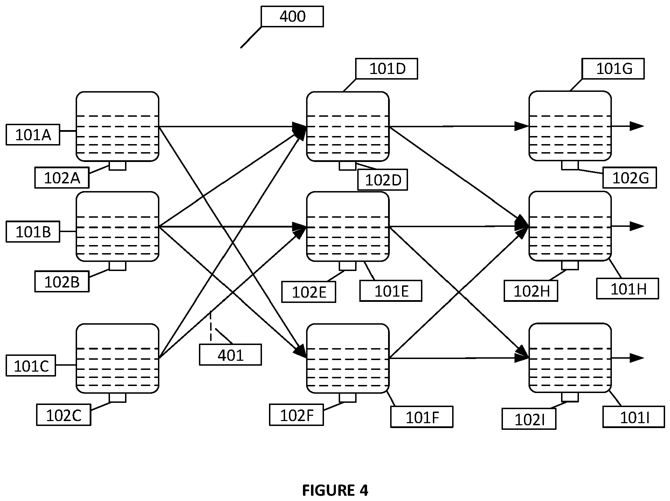

At the step 304, the process control system identifies deviations in the one or more parameters. The process plants generally use a closed loop control system for maintaining the desired quality or yield of the product. In a closed loop control system, there exists a definite correlation between a fault in certain measured signal and its impact on other one or more parameters associated with a process of the process plant. An example is detailed in FIGURE 4 later in the description. This correlation affects the desired quality or yield of the product. Therefore, the deviations with respect to the one or more parameters associated with the process is identified based on the correlation.

In an embodiment, identifying deviations in the one or more parameters includes correlating the one or more parameters with a predefined threshold range. The threshold range for a process equipment may indicate a maximum and minimum quantity of the materials stored in the process equipment or a maximum and minimum quantity of the material flow from one process equipment to another. The predefined threshold range may vary from one process equipment to another and from one process plant to another. The one or more parameters may include at least one of a mass of a material, energy of the material and a rate of flow of the material.

Further in an embodiment, an Artificial Intelligence (AI) based data analysis techniques for example Time Series Analysis may be used for identifying deviations in the one or more parameters of the process plant.

At the step 305, the process control system detects the faults in the measuring instruments (102) or the process equipment using the one or more correlated noises at the step 303 and the identified deviations at the step 304. The process control system may detect the faults using the standard statistical techniques for example Kalman filtering and principal component analysis used for detecting an outlier.

In an embodiment, the faults detected by the process control system is validated by the operator. The operator based on the faults detected by the process control system may manually verify or validate the fault in the process plant and the validation is updated to the process control system. Based on the validations updated by the operator the process control system may increase the probability of fault detection by incorporating a suitable learning for the AI technique used at the step 303 and step 304.

Figure 4 illustrates an exemplary fault detection of leakage in a process equipment of a process plant. A tank (e.g., 101A) is connected to one or more tanks (101D and 101F). Further, the tank 101D is connected to 101G and 101H and the tank 101F is connected to 101H and 101I as shown in figure 4. The measuring instruments (e.g., 102A) associated with the tanks (e.g., 101A) measure plurality of signals and send them to the process control system for fault detection. Let there be a leakage (401) in the flow from the tank 101C to the tank 101E. The leakage (401) affects the mass balance between the flows from the tank 101C to the tank 101E, further the flow from the tank 101E to the tank 101H and the flow from the tank 101E to the tank 101I. Further, the leakage (401) affects an accumulation of the materials in the tank 101E. The noise extracted across the one or more measured signals during the leakage (401) is correlated using the one or more AI based data analysis technique with the noise extracted from the reference signals obtained in the absence of the fault or the leakage. For example, due to the leakage (401) the noise correlation in the flow from the tank 101E to the tank 101H and the tank 101I may be higher. Thus, the obtained noise correlations along with the conventional data reconciliation the fault or the leakage (401) is identified.

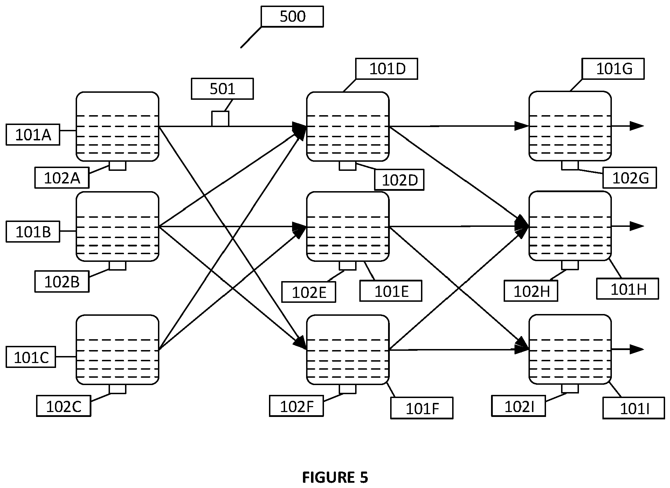

Figure 5 illustrates an exemplary fault detection of drift in the measurement of a flow sensor of a process plant. A tank (e.g., 101A) is connected to one or more tanks (101D and 101F). Further, the tank 101D is connected to 101G and 101H and the tank 101F is connected to 101H and 101I as shown in figure 5. The measuring instruments (e.g., 102A) associated with the tank (e.g., 101A) measure a plurality of signals and send them to the process control system for fault detection. Let there be a drift in a signal measured by the flow sensor (501) associated with the flow from the tank 101A to the tank 101D. This results in a lesser material for formulation in the tank 101H. To achieve the desired quality or yield of the product, the flow from the tank 101E to the tank 101H may be higher to compensate for the lesser material for formulation in the tank 101H. Based on the closed loop system analysis the process control system identifies the deviation in the measured flow of materials from the tank 101A and the tank 101E by comparing the measured flow of the flow sensor (501) with the predefined threshold range. Thus, the identified deviations in the measured flow along with the conventional data reconciliation the fault or the drift in the flow sensor (501) is identified.

This written description uses examples to describe the subject matter herein, including the best mode, and also to enable any person skilled in the art to make and use the subject matter.

### Referral Numerals:

- 101 -: Tank;
- 102 -: Measuring Instruments;
- 103 -: Summing Unit;
- 200 -: Process Control System;
- 201 -: I/O Interface;
- 202 -: Processor;
- 203 -: Network Interface;
- 204 -: Storage Interface;
- 205 -: Memory;
- 206 -: User Interface;
- 207 -: Operating System;
- 208 -: Web Server;
- 206 -: Communication Network;
- 210 -: Input Device;
- 211 -: Output Device;
- 212 -: Remote Devices;
- 401 -: Leakage;
- 501 -: Flow Sensor;

## Claims

1. A method for detecting faults in a plurality of measuring instruments (102) and process equipment in a process plant, wherein the plurality of measuring instruments (102) is configured to monitor one or more parameters associated with a process, wherein a plurality of measured signals is generated based on the monitoring, the method is performed by a process control system, the method comprising:
receiving the plurality of measured signals from the plurality of measuring instruments (102);
extracting noise present in the plurality of measured signals;
correlating the extracted noise from the plurality of measured signals with noise extracted from a plurality of reference signals, wherein the plurality of reference signals is obtained in absence of faults in the plurality of measuring instruments (102);
identifying deviations in the one or more parameters; and
detecting faults in at least one of the plurality of measuring instruments (102) and the process equipment using the correlated noises and the identified deviations of the one or more parameters, wherein the detected faults are rectified for controlling the process in the process plant,
wherein identifying deviations includes correlating the one or more parameters with a predefined threshold range to determine deviations in the one or more parameters, wherein the one or more parameters comprises at least one of a mass of a material, energy of the material and a rate of flow of the material.

2. The method as claimed in claim 1, wherein correlating the plurality of extracted noise with the plurality of reference noise includes using one or more Artificial Intelligence (AI) based data analysis techniques.

3. The method as claimed in claim 1, wherein detection of the faults includes identifying at least one of a sensor malfunctioning, a sensor drift, a sensor calibration issue, a leakage of materials in the process equipment in the process plant.

4. The method as claimed in claim 1, wherein the detected faults are validated by an operator and the validated faults are used in subsequent fault detections.

5. A process control system for detecting faults in a plurality of measuring instruments (102) and process equipment in a process plant, comprises:
a processor; and
a memory communicatively coupled to the processor, wherein the memory stores the processor instructions, which, on execution, causes the processor to:
receive a plurality of measured signals from the plurality of measuring instruments (102);
extract a noise present in the plurality of measured signals;
correlate the extracted noise from the plurality of measured signals with a noise extracted from a plurality of reference signals, wherein the plurality of reference signals is obtained in the absence of faults in the plurality of measuring instruments (102);
identify deviations in the one or more parameters; and
detect faults in at least one of the plurality of measuring instruments (102) and the process equipment using the correlated noises and the identified deviations of the one or more parameters, wherein the detected faults are rectified for controlling the process in the process plant,
wherein the processor is configured to identify deviations includes correlating the one or more parameters with a predefined threshold range to determine deviations in the one or more parameters, wherein the one or more parameters comprises at least one of a mass of a material, energy of the material and a rate of flow of the material.

6. The process control system as claimed in claim 5, wherein the processor is configured to correlate the plurality of extracted noise with the plurality of reference noise includes using one or more Artificial Intelligence (AI) based data analysis techniques.

7. The process control system as claimed in claim 5, wherein the processor is configured to detect faults includes identifying at least one of a sensor malfunctioning, a sensor drift, a sensor calibration issue, a leakage of materials in the process equipment in the process plant.

8. The process control system as claimed in claim 5, wherein the operator validates the detected faults and the validated faults are used in subsequent fault detections.

## Patentansprüche

1. Verfahren zum Erkennen von Fehlern in einer Vielzahl von Messinstrumenten (102) und Prozessausrüstung in einer Prozessanlage, wobei die Vielzahl von Messinstrumenten (102) dafür ausgelegt ist, einen oder mehrere einem Prozess zugeordnete Parameter zu überwachen, wobei eine Vielzahl von gemessenen Signalen auf der Grundlage der Überwachung erzeugt wird, wobei das Verfahren von einem Prozesssteuerungssystem durchgeführt wird, wobei das Verfahren folgende Vorgänge umfasst:
Empfangen der Vielzahl von gemessenen Signalen von der Vielzahl von Messinstrumenten (102);
Extrahieren von Rauschsignalen, die in der Vielzahl der gemessenen Signale vorhanden sind;
Korrelieren der extrahierten Rauschsignale aus der Vielzahl von gemessenen Signalen mit den aus einer Vielzahl von Referenzsignalen extrahierten Rauschsignalen, wobei die Vielzahl von Referenzsignalen bei Abwesenheit von Fehlern in der Vielzahl von Messinstrumenten (102) erhalten wird;
Identifizieren von Abweichungen beim einen oder den mehreren Parametern; und
Erkennen von Fehlern in mindestens einem der Vielzahl von Messinstrumenten (102) und der Prozessausrüstung unter Verwendung der korrelierten Rauschsignale und der identifizierten Abweichungen des einen oder der mehreren Parameter, wobei die erkannten Fehler zur Steuerung des Prozesses in der Prozessanlage behoben werden,
wobei das Identifizieren von Abweichungen das Korrelieren des einen oder der mehreren Parameter mit einem vordefinierten Schwellenwertbereich zum Bestimmen von Abweichungen des einen oder der mehreren Parameter beinhaltet, wobei der eine oder die mehreren Parameter mindestens eines von einer Masse eines Materials, einer Energie des Materials und einer Strömungsrate des Materials umfassen.

2. Verfahren nach Anspruch 1, wobei das Korrelieren der Vielzahl von extrahiertem Rauschsignalen mit der Vielzahl von Referenzrauschsignalen das Verwenden einer oder mehrerer auf künstlicher Intelligenz, KI, basierenden Datenanalysetechniken beinhaltet.

3. Verfahren nach Anspruch 1, wobei die Erkennung von Fehlern das Identifizieren von mindestens einem von einer Sensorstörung, einer Sensordrift, einem Sensorkalibrierungsproblem, einer Materialleckage in der Prozessausrüstung in der Prozessanlage beinhaltet.

4. Verfahren nach Anspruch 1, wobei die erkannten Fehler von einem Bediener validiert werden und die validierten Fehler bei nachfolgenden Fehlererkennungen verwendet werden.

5. Prozesssteuerungssystem zum Erkennen von Fehlern in einer Vielzahl von Messinstrumenten (102) und Prozessausrüstung in einer Prozessanlage, umfassend:
einen Prozessor; und
einen Speicher, der kommunikativ mit dem Prozessor gekoppelt ist, wobei der Speicher die Prozessoranweisungen speichert, die bei ihrer Ausführung den Prozessor zu folgenden Vorgängen veranlassen:
Empfangen einer Vielzahl von gemessenen Signalen von der Vielzahl von Messinstrumenten (102);
Extrahieren eines Rauschsignals, das in der Vielzahl der gemessenen Signale vorhanden ist;
Korrelieren des extrahierten Rauschsignals aus der Vielzahl von gemessenen Signalen mit einer aus einer Vielzahl von Referenzsignalen extrahierten Rauschsignalen, wobei die Vielzahl von Referenzsignalen bei Abwesenheit von Fehlern in der Vielzahl von Messinstrumenten (102) erhalten wird;
Identifizieren von Abweichungen des einen oder der mehreren Parameter; und
Erkennen von Fehlern in mindestens einem der Vielzahl von Messinstrumenten (102) und der Prozessausrüstung unter Verwendung des korrelierten Rauschsignals und der identifizierten Abweichungen des einen oder der mehreren Parameter, wobei die erkannten Fehler zur Steuerung des Prozesses in der Prozessanlage behoben werden,
wobei das Identifizieren, durch den Prozessor, von Abweichungen das Korrelieren des einen oder der mehreren Parameter mit einem vordefinierten Schwellenwertbereich zum Bestimmen von Abweichungen des einen oder der mehreren Parameter beinhaltet, wobei der eine oder die mehreren Parameter mindestens eines von einer Masse eines Materials, einer Energie des Materials und einer Strömungsrate des Materials umfassen.

6. Prozesssteuerungssystem nach Anspruch 5, wobei der Prozessor dafür ausgelegt ist, die Vielzahl von extrahiertem Rauschsignalen mit der Vielzahl von Referenzrauschsignalen unter Verwendung einer oder mehrerer auf künstlicher Intelligenz, KI, basierenden Datenanalysetechniken zu korrelieren.

7. Prozesssteuerungssystem nach Anspruch 5, wobei das Erkennen, durch den Prozessor, von Fehlern das Identifizieren von mindestens einem von einer Sensorstörung, einer Sensordrift, einem Sensorkalibrierungsproblem, einer Materialleckage in der Prozessausrüstung in der Prozessanlage beinhaltet.

8. Prozesssteuerungssystem nach Anspruch 5, wobei der Bediener die erkannten Fehler validiert und die validierten Fehler bei nachfolgenden Fehlererkennungen verwendet werden.

## Revendications

1. Procédé de détection de défauts dans une pluralité d'instruments de mesure (102) et d'équipements de traitement dans une usine de traitement, dans lequel la pluralité d'instruments de mesure (102) est configurée pour surveiller un ou plusieurs paramètres associés à un processus, dans lequel une pluralité de signaux mesurés est générée en fonction de la surveillance, le procédé est réalisé par un système de régulation de processus, le procédé comprenant :
la réception de la pluralité de signaux mesurés à partir de la pluralité d'instruments de mesure (102) ;
l'extraction du bruit présent dans la pluralité de signaux mesurés ;
la corrélation du bruit extrait de la pluralité de signaux mesurés avec un bruit extrait d'une pluralité de signaux de référence, dans lequel la pluralité de signaux de référence est obtenue en l'absence de défauts dans la pluralité d'instruments de mesure (102) ;
l'identification d'écarts dans les un ou plusieurs paramètres ; et
la détection de défauts dans au moins un de la pluralité d'instruments de mesure (102) et d'équipements de traitement à l'aide des bruits corrélés et des écarts identifiés des un ou plusieurs paramètres, dans lequel les défauts détectés sont corrigés pour réguler le processus dans l'installation de traitement,
dans lequel l'identification d'écarts comprend la corrélation des un ou plusieurs paramètres avec une plage de seuils prédéfinie pour déterminer des écarts dans les un ou plusieurs paramètres, dans lequel les un ou plusieurs paramètres comprennent au moins une masse d'un matériau, une énergie du matériau et un débit d'écoulement du matériau.

2. Procédé selon la revendication 1, dans lequel la corrélation de la pluralité de bruits extraits avec la pluralité de bruits de référence comporte l'utilisation d'une ou plusieurs techniques d'analyse de données basées sur l'intelligence artificielle (AI).

3. Procédé selon la revendication 1, dans lequel la détection des défauts comporte l'identification d'au moins un dysfonctionnement de capteur, une dérive de capteur, un problème d'étalonnage de capteur, une fuite de matériaux dans l'équipement de traitement de l'usine de traitement.

4. Procédé selon la revendication 1, dans lequel les défauts détectés sont validés par un opérateur et les défauts validés sont utilisés dans des détections de défauts ultérieures.

5. Système de régulation de processus pour détecter des défauts dans une pluralité d'instruments de mesure (102) et d'équipements de traitement dans une usine de traitement comprenant :
un processeur ; et
une mémoire couplée de manière communicative au processeur, dans lequel la mémoire stocke les instructions de processeur qui, à leur exécution, amènent le processeur à:
recevoir une pluralité de signaux mesurés à partir de la pluralité d'instruments de mesure (102) ;
extraire un bruit présent dans la pluralité de signaux mesurés ;
corréler le bruit extrait de la pluralité de signaux mesurés avec un bruit extrait d'une pluralité de signaux de référence, dans lequel la pluralité de signaux de référence est obtenue en l'absence de défauts dans la pluralité d'instruments de mesure (102) ;
identifier des écarts dans les un ou plusieurs paramètres ; et
détecter des défauts dans au moins un de la pluralité d'instruments de mesure (102) et d'équipements de traitement en utilisant les bruits corrélés et les écarts identifiés des un ou de plusieurs paramètres, dans lequel les défauts détectés sont rectifiés pour réguler le processus dans l'installation de traitement,
dans lequel la configuration du processeur pour identifier les écarts comprend la corrélation des un ou plusieurs paramètres avec une plage de seuils prédéfinie pour déterminer des écarts dans les un ou plusieurs paramètres, dans lequel les un ou plusieurs paramètres comprennent au moins une masse d'un matériau, une énergie du matériau et un débit d'écoulement du matériau.

6. Système de régulation de processus selon la revendication 5, dans lequel la configuration du processeur pour corréler la pluralité de bruits extraits avec la pluralité de bruits de référence comprend l'utilisation d'une ou plusieurs techniques d'analyse de données basées sur l'intelligence artificielle (AI).

7. Système de régulation de processus selon la revendication 5, dans lequel la configuration du processeur pour détecter des défauts comporte l'identification d'au moins un dysfonctionnement de capteur, une dérive de capteur, un problème d'étalonnage de capteur, une fuite de matériau dans l'équipement de traitement de l'usine de traitement.

8. Système de régulation de processus selon la revendication 5, dans lequel l'opérateur valide les défauts et les défauts validés sont utilisés dans des détections de défauts ultérieures.
